Europäisches Patentamt

European Patent Office

Office européen des brevets

(11) Veröffentlichungsnummer: **0 379 001**

**A1**

# (12) EUROPÄISCHE PATENTANMELDUNG

(21) Anmeldenummer: **90100131.3**

(22) Anmeldetag: **04.01.90**

(51) Int. Cl.5: **A01D 34/73**

(30) Priorität: **16.01.89 DE 8900400 U**

(43) Veröffentlichungstag der Anmeldung:
**25.07.90 Patentblatt 90/30**

(84) Benannte Vertragsstaaten:
**AT BE DE DK ES FR GB IT LU NL SE**

(71) Anmelder: **GUTBROD-WERKE GMBH**
**Industriegelände Postfach 60**
**D-6601 Saarbrücken-Bübingen/Saar(DE)**

(72) Erfinder: **Klever, Manfred**
**Scheidter Strasse 40**
**D-6601 Saarbrücken-Scheidterberg(DE)**
Erfinder: **Rott, Karl-Heinz**
**Waldstrasse 17**
**D-6601 Saarbrücken-Bübingen(DE)**

(74) Vertreter: **Flaccus, Rolf-Dieter**
**Bussardweg 12**
**D-5047 Wesseling(DE)**

(54) **Schraubenlose Befestigung der Messer eines Rasenmähers am Umfang einer rotierenden Scheibe.**

(57) Eine schraubenlose Befestigung der Messer eines Rasenmähers eines befindet sich am Umfang einer rotierenden Scheibe, die mit umfangsverteilten Noppen versehen ist, die am Ende eines Schaftteils einen verdickten Kopf aufweisen, wobei die Messer mit einer dem verdickten Kopf entsprechenden Öffnung versehen sind, über die die Messer bis zum Schaftteil einer Noppe einrastbar sind. Die Befestigung ist dadurch gekennzeichnet, daß der verdickte Kopf (1a) der Noppen sowie die Öffnung (4) der Messer (3) unrund sind, und daß die Unrundheit des verdickten Kopfes auf der rotierenden Schreibe (1) so ausgerichtet ist, daß jedes Messer nur in einer von der fliehkraftbedingten, im wesentlichen radial gerichteten Schneidlage abweichenden Einrast-Schwenklage (3') bis zum Schaftteil (1b) der Noppen einrastbar ist.

FIG.1

EP 0 379 001 A1

## Schraubenlose Befestigung der Messer eines Rasenmähers am Umfang einer rotierenden Scheibe

Die Erfindung betrifft eine schraubenlose Befestigung der Messer eines Rasenmähers am Umfang einer rotierenden Scheibe, die mit umfangsverteilten Noppen versehen ist, die am Ende eines Schaftteils einen verdickten Kopf aufweisen, wobei die Messer mit einer dem verdickten Kopf entsprechenden Öffnung versehen sind, über die das Messer bis zum Schaftteil einer Noppe einrastbar ist. Eine derartige Messerbefestigung ist durch die DE 33 32 183 A1 bekanntgeworden, bei der die aus biegeelastischem, verschleißfesten Kunststoff bestehenden Messer an ihrem Befestigungsende zwei ineinander übergehende Bohrungen unterschiedlichen Durchmessers aufweisen. Die größere Bohrung entspricht dem verdickten Kopfteil von umfangsverteilten Noppen der rotiertenden Scheibe, wobei die Noppen aus Schraubenbolzen bestehen. Der Durchmesser der kleineren Bohrung entspricht dem Durchmesser des Schaftteils. Die Befestigung eines Messers an der rotierenden Scheibe wird dadurch erhalten, daß die größere Bohrung des Messers über den verdickten Kopf des Schraubenbolzens übergestreift wird, wonach durch Ziehen des Messers der Schaftteil in die Bohrung kleineren Durchmessers eingezwängt wird und somit das Messer pendelnd eingerastet ist. Bei diesem Einrasten muß sich der Schraubennbolzen in die Bohrung kleineren Durchmessers unter elastischer Verformung des Messermaterials einzwängen, weshalb das Material biegeelastisch sein muß.

Ein Nachteil dieser bekannten schraubenlosen Messerbefestigung besteht darin, daß im Laufe der Zeit nach mehreren Messerwechseln die Verengung zwischen den beiden Bohrungen unterschiedlichen Durchmessers durch Verscheiß beseitigt wird, so daß die Messer nicht mehr formschlüssig am Schaftteil gesichert sind. Zwar wird beim Betrieb des Rasenmähers der Schaftteil der Befestigungsschrauben unter der Fliehkraft stets in der Bohrung kleineren Durchmessers gehalten, jedoch ist es beim Hantieren oder Transport des Rasenmähers möglich, daß nach Verschleiß der Verengung zwischen den beiden Bohrungen der verdickte Kopf der Befestigungsschraube mit der größeren Bohrung eines Messers in Deckung gelangt und das Messer sich somit ungewollt lösen kann, und zwar bei fast allen möglichen Schwenklagen. Dies liegt daran, daß im Falle der bekannten Messerbefestigung die Befestigungsschrauben von oben in die rotierende Scheibe eingesetzt ist, die im mittleren Bereich zwischen Achsnabe und einer rotationssymmetrischen Randfläche, an der die Messer befestigt sind, abwärts abgewinkelt ist. Diese Abwinkelungen begrenzen die möglichen Schwenklagen der pendelnd befestigten Messer, die jedoch über einen Schwenkbereich von über 180 in jeder Schwenklage nicht gesichert sind, wenn der verdickte Kopf der Befestigungsschraube mit der größeren Bohrung des Messers in Deckung gelangt.

Der Erfindung liegt die Aufgabe zugrunde, eine schraubenlose Messerbefestigung für Rasenmäher zu schaffen, die, unabhänig von dem Versehleiß im Bereich der Einrast-Öffnungen der Messer eine Höchstmaß an Sicherheit dagegen bietet, daß sich die Messer ungewollt lösen können.

Die Lösung dieser Aufgabe besteht gemäß der Erfindung darin, daß der verdickte Kopf der Noppen sowie die Öffnung der Messer unrund sind, und daß die Unrundheit des verdickten Kopfes auf der rotierenden Scheibe so ausgerichtet ist, daß jedes Messer nur in einer von der fliehkraftbedingten, im wesentlichen radial gerichteten Schneidlage abweichenden Ein rast-Schwenklage bis zum Schaftteil der Noppen einrastbar ist. Ist die Unrundheit unregelmäßig, gibt es nur eine Einrast-Schwenklage der Messer, in der ein ungewolltes Lösen der Messer möglich wäre. Auch ein gleichschenkliges Dreieck ist in diesem Sinne eine unregelmäßige Unrundheit. Ist die Unrundheit eine Ellipse, sind bereits zwei um 180° verschiedene Einrast-Schwenklagen gegeben.

Ist die Unrundheit dreieckförmig, wozu es sich empfiehlt, daß die messerseitigen Öffnungen mit einer Ecke des Dreiecks dem Befestigungsende der Messer zugewandt sind, so werden diese Ekken mit einer dem Radius des Schaftteils enstprechenden Abrundung versehen. An diese Abrundung legt sich das Schaftteil der Noppen formschlüssig an, wenn die Messer beim Schneidbetrieb unter der Fliehkraft eine radiale Schneidlage annehmen. Eine pendelnde Befestigung der Messer bleibt dabei erhalten.

Soweit bisher beschrieben, ist es gleichgültig, ob die Noppen der rotierenden Scheibe auf der der Rasenfläche zugewandten oder abgewandten Seite der rotierenden Scheibe angeordnet sind, solange die Messer nicht mit Windflügeln versehen sind. Aus der DE 33 32 183 A1 geht nämlich hervor, daß auch die angeschärfte Schneide der Messer eine Sogwirkung begründen kann. Sind jedoch die Messer mit abgewinkelten Windflügeln versehen, haben die Öffnungen gemäß der Erfindung zweckmäßig die Gestalt eines gleichseitigen Dreiecks, wobei die Noppen an der der Rasenfläche zugewandten Seite der rotierenden Scheibe angeordnet sind und die Messer aus biegeelastischem, verschleißfesten Kunststoff bestehen.

Hiermit ergibt sich eine Bestlösung für eine schraubenlose Messerbefestigung insoweit, als in allen möglichen Einrast-Schwenklagen der Messer die Windflügel die rotierende Scheibe schneiden würden, so daß die Messer nur eingerastet werden können, wenn sie aus biegeelastischen Kunststoff bestehen und beim Einrastvorgang etwas abgebogen werden können. Umgekehrt können diese Einrast-Schwenklagen beim Betrieb in keinem Falle mehr erreicht werden, da die Pendelbewegung der Messer durch den Anschlag der Windflügel am Rand der rotierenden Scheibe begrenzt ist. Die Messer sind damit absolut unverlierbar verriegelt.

Zur Herabsetzung der Verschleißes der aus Kunststoff bestehenden Messer ist es empfehlenswert, daß der Schaftteil der Noppen von einem metallischen Ring, vorzugsweise einem Messingring, umgeben ist.

Obwohl die Noppen mit dem verbreiterten Kopf und dem Schaftteil gemäß dem Stand der Technik aus Bestigungsschrauben gebildet sein können, ist gemäß der weiteren Erfindung vorgesehen, daß die Noppen an der aus Kunststoff bestehenden rotierenden Scheibe angeformt sind, wobei der metallische Ring eingeformt ist.

In der Zeichnung ist als Ausführungsbeispiel einer Messerbefestigung gemäß der Erfindung die bevorzugte Variante mit messerseitigen Öffnungen und Noppen in Gestalt eines gleichseitigen Dreiecks dargestellt, und zwar zeigen

Fig. 1 einen axialen Schnitt durch die rotierende Scheibe mit einem daran befestigten Messer,

Fig. 2 eine Draufsicht auf ein loses Messer mit eingezeichnetem Querschnitt, und

Fig. 3 die Unteransicht eines Sektors der rotierenden Scheibe mit drei Noppen.

Die rotierende Scheibe 1 ist an einer Antriebswelle 2 befestigt, die die Motorwelle eines Elektromotors sein kann. Umfangsverteilt sind in der Nähe des Randes der aus Kunststoff bestehenden rotierenden Scheibe 1 Noppen angeformt, die einen verdickten Kopf 1a in Gestalt eines gleichseitigen Dreiecks sowie ein Schaftteil 1b aufweisen, die an der der Rasenfläche zugewandten, unteren Seite der rotierenden Scheibe 1 angeformt sind. Die Noppen 1a, 1b sind so ausgerichtet, daß eine Ecke des gleichseitigen Dreiecks dem äußeren Rand der Scheibe 1 zugewandt ist.

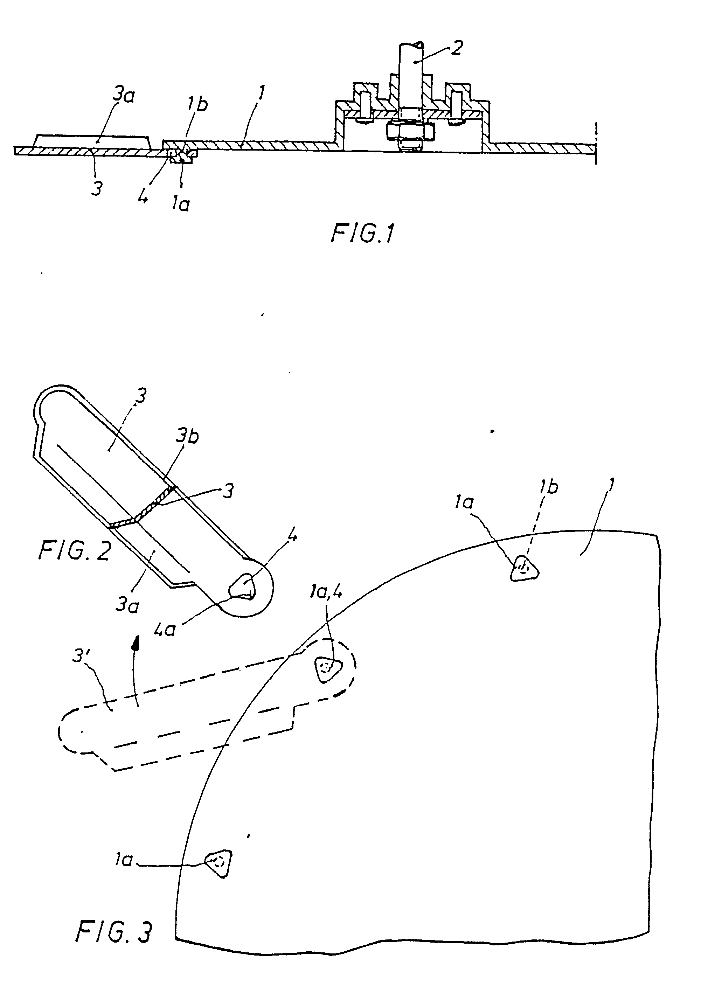

Die Messer 3 sind mit Windflügeln 3a auf der einen Seite und mit angeschärften Schneiden 3b auf der anderen Seite versehen. Ferner weisen die Messer am Befestigungsende eine Öffnung 4 ebenfalls in Gestalt eine gleichseitigen Dreiecks auf, das der Dreiecksform der Noppen 1a, 1b entspricht. Allerdings ist eine Ecke der dreieckförmigen Öffnung 4 dem Befestigungsende des Messers 3 zugewandt. In der Lage, die ein Messer 3 nach Fig. 2 gegenüber der rotierenden Scheibe 1 nach Fig. 3 einnimmt, ist somit die Öffnung 4 spiegelbildlich zu der Dreiecksform eines dreieckförmigen Kopfteils 1a der gegenüberliegenden Noppe. Die dem Befestigungsende des Messers 3 zugewandte Ecke der dreieckförmigen Öffnung 4 ist mit einer dem Radius des Schaftteils 1b entsprechenden Abrundung 4a versehen. Zweckmäßig sind alle Ecken der dreieckförmigen Öffnung 4 mit dieser Abrundung 4a versehen, was dann auch für den verdickten Kopf 1a der scheibenseitigen Noppen gilt, da stets die messerseitigen Öffnungen und die Gestalt der Köpfe 1a der Noppen derart gestaltet und ausgerichtet sein müssen, daß die Öffnungen 4 über die Köpfe 1a nur in einer Einrast-Schwenklage der Messer bis zum Schaftteil 1b aufgeschoben werden können, die von der fliehkraftbedingten Schneidlage der Messer, entsprechend Fig. 2 unterschiedlich ist. In Fig. 3 ist eine Einrast-Schwenklage des Messers 3 gestrichelt dargestellt und mit 3′ bezeichnet. Das Messer in der Lage 3′ ist jedoch nur dann auf einen verbreiterten dreieckförmigen Kopf 1a einrastbar, wenn das Messer aus biegeela stischem Kunststoff besteht, denn - wie Fig. 3 in Verbindung mit Fig. 1 zeigt - würde der Windflügel 3a in der Einrast-Schwenklage 3 des Messers 3 die rotierende Scheibe 1 schneiden. Es muß also beim Einrasten abgebogen werden können.

Das Befestigen eines Messers 3 geht wie folgt vor sich:

Das Messer 3 wird in der in Fig. 3 gestrichelt dargestellten Einrast-Schwenklage erfaßt und so nach unten verbogen, daß die Öffnung 4 in dieser Einrast-Schwenklage über einen verbreiterten dreieckförmigen Kopf 1a übergeschoben werden kann. Nach einer weiteren Bewegung gegen lie rotierend Scheibe 1 gelangt die messerseitige Öffnung 4 in den Bereich des Schaftteils 1b einer scheibenseitigen Noppe. Wenn dann das Messer aus der gestrichelt dargestellten Schwenklage in Pfeilrichtung verschwenkt wird, kommt der Windflügel 3a von dem Umriß der rotierenden Scheibe 1 frei, so daß das Messer wieder seine gestreckte Lage einnehmen kann. Da die Öffnung 4 und der verbreiterte Kopf 1a einer Noppe durch diese Drehung außer Deckung gelangen, ist das Messer schraubenlos befestigt, wenn es auch verschiedene Freiheitsgrade deshalbhat, weil der Schaftteil 1b kleiner ist als die messerseitige Öffnung 4. Im Schneidbetrieb jedoch legt sich unter der Fliehkraft, die auf die Messer 3 einwirkt, die Abrundung 4a gemäß Fig. 2 gegen das Schaftteil 1b.

Die auf diese Weise befestigten Messer sind frei pendelnd, jedoch niemals bis zu einer in Fig. 3 dargestellten Einrast-Schwenklage, denn vorher würden die Windflügel 3a am äußeren Rand der rotierenden Scheibe 1 anstoßen. Dies gilt -weniger ausgeprägt - auch für eine gegenüber Fig. 2 spiegelbildlichen Einrast-Schwenklage 3′, in der auch die Windflügel 3a aufgrund ihrer Längenausdehnung bis in die Nähe der Öffnungen 4 den Randbereich der rotierenden Scheibe 1 anschneiden würden.

Die Messer sind zwar relativ locker als Pendelmesser befestigt, jedoch ist keine Schwenklage der Messer möglich, in der die dreieckförmigen messerseitigen Öffnungen 4 mit den in bestimmter Weise ausgerichteten verdickten Köpfen 1a der Noppen in Deckung gelangen könnten, außer die Messer werden zum Ausbau aufgrund ihrer Elastizität so verbogen, daß die Windflügel 3a sich in der Einrast-Schwenklage 3′ der Messer unter die der Rasenfläche zugeordnete (untere) Seite der rotierenden Scheibe 1 verbringen lassen.

**Ansprüche**

1. Schraubenlose Befestigung der Messer eines Rasenmähers am Umfang einer rotierenden Scheibe, die mit umfangsverteilten Noppen versehen ist, die am Ende eines Schaftteils einen verdickten Kopf aufweisen, wobei die Messer mit einer dem verdickten Kopf entsprechenden Öffnung versehen sind, über die die Messer bis zum Schaftteil einer Noppe einrastbar sind,
**dadurch gekennzeichnet,** daß der verdickte Kopf (1a) der Noppen sowie die Öffnung (4) der Messer (3) unrund sind, und daß die Unrundheit des verdickten Kopfes auf der rotierenden Scheibe (1) so ausgerichtet ist, daß jedes Messer nur in einer von der fliehkraftbedingten, im wesentlichen radial gerichteten Schneidlage abweichenden Einrast-Schwenklage (3′) bis zum Schaftteil (1b) der Noppen einrastbar ist.

2. Befestigung nach Anspruch 1, dadurch gekennzeichnet, daß die Unrundheit der verdickten Köpfe (1a) und der Öffnungen (4) dreieckförmig ist, und daß die messerseitigen öffnungen mit einer Ecke des Dreiecks dem Befestigungsende der Messer (3) zugewandt und an diesen Ecken mit einer dem Radius des Schaftteils (1b) entsprechenden Abrundung (4a) versehen sind.

3. Befestigung nach Anspruch 2, mit an den Messern angeformten Windflügeln,
**dadurch gekennzeichnet,** daß die Öffnungen (4) der Messer die Gestalt eines gleichseitigen Dreiecks haben, daß die Noppen (1a, 1b an der der Rasenfläche zugewandten Seite der rotierenden Scheibe (1) angeordnet sind, und daß die Messer (3) aus biegeelastischem, verschleißfesten Kunststoff bestehen.

4. Befestigung nach Anspruch 3, dadurch gekennzeichnet, daß der Schaftteil (1b) der Noppen von einem metallischen Ring umgeben ist.

5. Befestigung nach Anspruch 4, dadurch gekennzeichnet, daß die Noppen (1a, 1b) an der aus Kunststoff bestehenden rotierenden Scheibe (1) angeformt sind, wobei der metallische Ring eingeformt ist.

FIG.1

FIG.2

FIG.3

| | | |
|---|---|---|
| **Europäisches Patentamt** | **EUROPÄISCHER RECHERCHENBERICHT** | Nummer der Anmeldung |
| | | EP 90 10 0131 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | CH-A-474204 (FELLA-WERKE) <br> * Spalte 3, Zeile 1 - Spalte 3, Zeile 25; Figuren 3, 4 * | 1, 2 | A01D34/73 |
| Y | | 3 | |
| Y | US-A-4107841 (REBHUN) <br> * Spalte 3, Zeile 11 - Spalte 3, Zeile 46 * | 3 | |
| A | | 5 | |
| A | US-A-3320733 (KIRK) <br> * das ganze Dokument * | 1 | |
| D,A | DE-A-3332183 (DIESNER) <br> --- | | |
| A | DE-A-1923411 (TEXAS INDUSTRIES) <br> --- | | |
| A | DE-A-3406801 (HITACHI) <br> --- | | |
| A | GB-A-1422335 (MASSEY FERGUSON PERKINS) <br> ----- | | |

**RECHERCHIERTE SACHGEBIETE (Int. Cl.5 )**

A01D

Der vorliegende Recherchenbericht wurde für alle Patentansprüche erstellt

| Recherchenort | Abschlußdatum der Recherche | Prüfer |
|---|---|---|
| DEN HAAG | 04 APRIL 1990 | DE LAMEILLIEURE D. |